**Europäisches Patentamt**

**European Patent Office**

**Office européen des brevets**

(19)

(11) Numéro de publication: **0 107 539**
**B1**

# (12) FASCICULE DE BREVET EUROPEEN

(45) Date de publication du fascicule du brevet:
**28.10.87**

(21) Numéro de dépôt: **83401851.7**

(22) Date de dépôt: **23.09.83**

(51) Int. Cl.⁴: **H 02 M 5/45,** H 02 P 1/46

(54) Circuit de commande d'un moteur synchrone à deux enroulements induits.

(30) Priorité: **07.10.82 FR 8216786**

(43) Date de publication de la demande:
**02.05.84 Bulletin 84/18**

(45) Mention de la délivrance du brevet:
**28.10.87 Bulletin 87/44**

(84) Etats contractants désignés:
**AT BE CH DE FR GB IT LI LU NL SE**

(56) Documents cités:
**EP - A - 0 039 281**
**DE - A - 1 538 150**
**FR - A - 2 196 736**
**FR - A - 2 385 252**
**FR - A - 2 452 200**
**FR - A - 2 479 600**

(73) Titulaire: **JEUMONT-SCHNEIDER Société anonyme dite:,
31-32, Quai de Dion Bouton, F-92811 Puteaux Cedex
(FR)**

(72) Inventeur: **Wiart, Albert, 20, rue de la République,
F-95110 Sannois (FR)**

(74) Mandataire: **Weinmiller, Jürgen et al,
Lennéstrasse 9 Postfach 24, D-8133 Feldafing (DE)**

ACTORUM AG

## Description

La présente invention concerne un circuit de commande d'un moteur synchrone à deux enroulements induits, permettant en particulier un démarrage régulier du moteur.

L'utilisation d'onduleurs à commutation naturelle pour commander un moteur synchrone à vitesse variable est bien connue.

Toutefois certains artifices doivent être mis en œuvre pour assurer le démarrage du moteur, puisque le désamorçage naturel des thyristors de l'onduleur ne peut être assuré par le moteur lui-même à basse vitesse du fait que le moteur ne produit pas une force électromotrice suffisante dans ce cas. De façon générale, il est alors nécessaire d'annuler régulièrement le courant contenu dans l'onduleur pour désamorcer les thyristors utilisés, puis d'amorcer un nouveau jeu de thyristors après rétablissement du courant continu qui est appliqué.

De cette annulation du courant puis de son rétablissement résultent un couple moteur irrégulier au démarrage et par suite des à-coups inopportuns.

L'utilisation de moteurs synchrones à deux enroulements induits déphasés électriquement, par exemple de 30° s'il s'agit de moteurs triphasés, permet d'atténuer ces à-coups aux basses vitesses de rotation du moteur sans toutefois les supprimer totalement, et assure également une meilleure régularité du couple-moteur aux vitesses supérieures.

Le brevet français 2 452 200 décrit un circuit de commande permettant de supprimer ces irrégularités dans le couple-moteur au démarrage, en compensant la diminution du couple-moteur résultant de l'annulation du courant dans un enroulement lors de la commutation des jeux de thyristors par une augmentation du courant appliqué à l'autre enroulement, de telle manière qu'aux faibles vitesses, et en particulier au démarrage du moteur, la somme des courants instantanés circulant dans l'ensemble des enroulements du moteur soit constante.

Toutefois le circuit décrit ne convient pas si le dispositif d'alimentation comprend un hacheur ou un redresseur à pont mixte. Le but de l'invention est d'obvier à cet inconvénient et d'assurer un démarrage sans irrégularité du couple-moteur.

L'invention a donc pour objet un circuit de commande d'un moteur synchrone à deux enroulements induits permettant un démarrage régulier du moteur.

Selon l'invention, le circuit de commande d'un moteur synchrone à deux enroulements induits comprend un dispositif d'alimentation électrique, délivrant un courant d'un sens unique déterminé, deux onduleurs à thyristors, dont les sorties sont respectivement reliées aux enroulements du moteur, un circuit intermédiaire relié d'une part au dispositif d'alimentation et d'autre part aux bornes d'entrée des onduleurs, une unité centrale de commande des thyristors. Le circuit intermédiaire est adapté à supprimer le courant dans les thyristors à commuter de chaque onduleur et comprend:

– une branche composée de deux thyristors en série reliant entre elles les bornes d'entrée du circuit intermédiaire, lesquelles sont respectivement reliées à une première paire de bornes d'entrée de polarités inverses desdits onduleurs,

– une branche reliant le point de jonction des deux thyristors à une seconde paire de bornes d'entrée de polarités inverses des onduleurs,

– deux inductances de même valeur présentant un fort facteur de couplage par inductance mutuelle, respectivement reliées en série avec les bornes d'entrée de l'une des deux paires de bornes d'entrée de polarités inverses des onduleurs.

Le circuit de commande est caractérisé en ce que le dispositif d'alimentation électrique a ses bornes de sortie reliées au moyen d'une branche de roue libre comportant au moins une diode de roue libre dont la cathode est reliée à la borne positive du dispositif d'alimentation, que la branche reliant le point de jonction des thyristors à la seconde paire de bornes d'entrée de polarités inverses desdits onduleurs est constituée par un condensateur et que le début de la suppression du courant circulant dans les thyristors à commuter de chaque onduleur s'effectue lors d'une phase de roue libre pendant laquelle ladite branche de roue libre placée à la sortie du dispositif d'alimentation électrique est conductrice.

L'invention sera mieux comprise et d'autres buts, avantages et caractéristiques apparaîtront plus clairement à la lecture de la description qui suit, accompagnée de quatre figures illustrant de façon non limitative, des modes préférés de réalisation de l'invention.

La figure 1 représente le schéma général de circuit de commande conforme à l'invention.

Les figures 2 à 4 représentent respectivement divers modes de réalisation du circuit de commande selon l'invention.

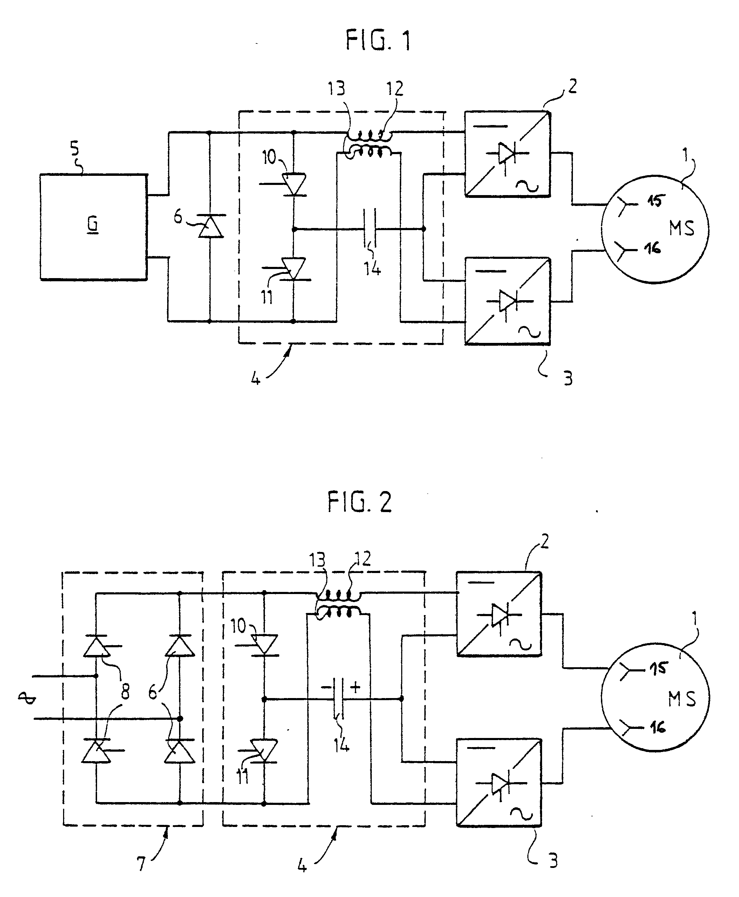

En référence maintenant à la figure 1, les deux enroulements induits du moteur synchrone 1 à commander sont respectivement connectés aux bornes de sortie de deux onduleurs 2 et 3 connectés en série et dont les bornes d'entrée sont reliées à un circuit intermédiaire 4 connecté aux bornes d'un dispositif d'alimentation électrique 5 dont les bornes de sortie sont reliées par une diode 6.

Une unité centrale non représentée sur la figure assure l'amorçage des différents thyristors du circuit.

Comme décrit ci-après à propos de divers modes de réalisation, le circuit intermédiaire 4 inclut deux inductances 12 et 13 à fort facteur de couplage par inductance mutuelle dont le rôle principal est d'assurer le transfert du courant d'un enroulement induit du moteur 1 à l'autre lors du démarrage ou à faible vitesse de rotation du moteur 1, étant entendu que dès que la vitesse du moteur 1 atteint 5 à 10% de sa vitesse nominale, le motor 1 développe une force électromotrice suffisante pour assurer le désamorçage naturel des thyristors. Les deux inductances 12 et 13 ci- dessus, qui jouent également le rôle d'inductances de lissage, peuvent être réalisées à l'aide d'une inductance unique à point milieu sorti, comme représenté figure 4. Le dispositif d'alimentation délivre un courant continu interrompu qui peut être par exemple fourni par un équipement redresseur à pont mixte s'il est relié à une source de puissance alternative, ou par un hacheur s'il est relié à une source de puissance continue.

En référence à la figure 2 le circuit est alimenté à titre d'exemple par un redresseur 7, dit à pont mixte qui permet d'utiliser une quantité de courant beaucoup moins importante qu'un redresseur dit à pont complet au bas régime du moteur. Ce redresseur 7 comprend de manière connue deux branches, l'une comportant deux thyristors 8 en série, et l'autre comportant deux diodes 6 également en série, connectées entre les bornes de sortie du redresseur 7 auxquelles est connecté le circuit intermédiaire 4.

Entre les bornes d'entrée de ce circuit intermédiaire 4 sont disposés en série deux thyristors 10 et 11 orientés dans le même sens. Deux inductances 12 et 13 de même valeur et couplées magnétiquement sont connectées, la première 12 entre une borne d'entrée du circuit intermédiaire 4 et une borne d'entrée du premier onduleur 2, la seconde 13 entre l'autre borne d'entrée du circuit intermédiaire 4 et la borne d'entrée du second onduleur 3 de polarité opposée à celle où la première 12 est connectée au premier onduleur 2. Ce circuit intermédiaire 4 comprend également un condensateur 14 branché entre le point commun aux deux thyristors 10 et 11 et le point commun des deux onduleurs 2 et 3 reliant les deux autres bornes d'entrée de polarités inverses.

Le fonctionnement de ce circuit est le suivant. On sait que, pour assurer le désamorçage des tyhristors conducteurs, il est nécessaire d'interrompre le courant circulant dans ces thyristors. Le redresseur 7 à pont mixte utilisé ici ne fournissant pas de tension négative, le condensateur 14 pallie avantageusement à cet inconvénient aux basses vitesses du moteur.

En considérant le moment du cycle où il est nécessaire d'effectuer une commutation des thyristors de l'onduleur 2, on attend que le redresseur 7 soit en phase de roue libre, c'est-à-dire que le courant passe dans les diodes 6. Le condensateur 14 ayant préalablement été chargé positivement sur l'armature reliée aux onduleurs 2 et 3 comme indiqué sur la figure 2, le thyristor 10 est amorcé et le courant s'établit par décharge du condensateur 14 dans le circuit suivant: diodes 6, thyristor 10, condensateur 14, onduleur 3 et l'enroulement correspondant du moteur, inductance 13. Sous l'effet des inductances 12 et 13 couplées magnétiquement et assurant le transfert de courant d'un enroulement à l'autre, le courant augmente dans l'inductance 13 et diminue dans l'inductance 12 où finalement il s'annule, ce qui entraîne le désamorçage des thyristors précédemment conducteurs de l'onduleur 2 puisque plus aucun courant n'y circule.

La somme des intensités de courant traversant les onduleurs 2 et 3 restant constante du fait des inductances 12 et 13, le couple-moteur ne subit aucun à-coup. En outre, la commutation étant effectuée pendant la phase de roue libre, aucune perturbation ne se propage dans la ligne d'alimentation en amont.

Le condensateur 14 est encore chargé positivement du côté des onduleurs 2 et 3, mais sa charge initiale se réduit et s'annule. Sous l'effet du courant maintenu par l'inductance 13 et passant entièrement dans l'onduleur 3 et notamment dans le condensateur 14, ce dernier se recharge dans le sens du courant, c'est-à-dire qu'il se charge positivement du côté des thyristors 10 et 11. On amorce alors les thyristors qui doivent conduire dans l'onduleur 2, le condensateur 14 continuant à se recharger. Sous l'effet de la tension aux bornes du condensateur, le courant tend à passer dans l'inductance 12 et l'onduleur 2 et à diminuer d'autant dans l'onduleur 3 du fait du rôle des deux inductances couplées 12 et 13. Le transfert continue ainsi jusqu'à ce que les intensités des courants passant dans les onduleurs 2 et 3 soient égales. Le thyristor 10 se désamorce alors naturellement. Le condensateur 14 est alors suffisamment chargé positivement du côté des thyristors 10 et 11, de manière à pouvoir assurer la prochaine commutation des thyristors de l'onduleur 3.

La prochaine commutation devant se faire dans l'onduleur 3, on choisit alors une phase de roue libre pour amorcer le thyristor 11.

Par la décharge du condensateur 14 le courant s'établit dans le circuit suivant: inductance 12, onduleur 2 et l'enroulement correspondant du moteur, condensateur 14, thyristor 11, diodes 6. De la même manière que précédemment le courant s'annule dans l'onduleur 3 et le condensateur 14 se décharge. Les thyristors conduisant alors dans l'onduleur 3 se désamorcent, la charge du condensateur 14 s'annule, et celui-ci sous l'effet du courant maintenu par l'inductance 12 et circulant de l'onduleur 2 vers le thyristor 11, commence à se recharger positivement du côté des onduleurs 2 et 3. On amorce à cet instant un nouveau jeu de thyristors de l'onduleur 3. Le condensateur 14 continue à se charger et sous l'effet de la tension à ses bornes, le courant a tendance à revenir dans l'onduleur 3 et l'inductance 13. Le transfert s'effectue jusqu'à ce que l'intensité du courant soit égale dans les deux onduleurs 2 et 3. Cet équilibre étant atteint le thyristor 11 se désamorce naturellement, le condensateur 14 étant rechargé comme indiqué sur la figure 2, charge positive sur l'armature du côté des onduleurs 1 et 2, prêt pour effectuer une commutation sur l'onduleur 2.

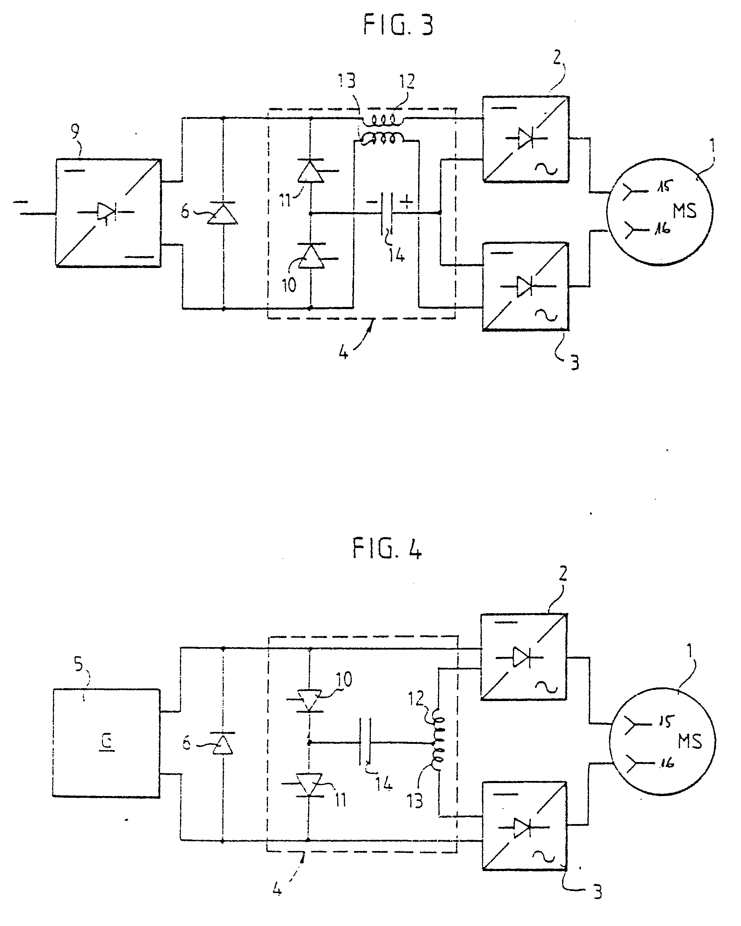

La figure 3 représente un circuit de commande équivalent à celui représenté à la figure 2. Il est alimenté par un convertisseur statique de courant continu par exemple un hacheur 9. Pour une meilleure compréhension du fonctionnement, la diode 6 a été représentée à l'extérieur du hacheur et placée entre ses bornes de sortie.

Le circuit intermédiaire 4 de la figure 3 ne diffère du circuit de la figure 2 que par le sens de connection des thyristors 10 et 11. Ce circuit de commande comprend également deux onduleurs 2 et 3 distribuant le courant dans les deux enroulements du moteur 1. Le fonctionnement de ce circuit est équivalent à celui du circuit précédemment décrit. On considère le moment du cycle de commande où il est nécessaire d'effectuer une commutation dans l'onduleur 2 et où le circuit est en roue libre. On amorce le thyristor 10 et la charge initiale, positive côté onduleur, du condensateur 14 comme indiqué sur la figure 3, permet à un courant de s'établir dans le circuit suivant: thyristor 10, condensateur 14, onduleur 3, inductance 13. Sous l'effet de la tension du condensateur 14, le courant a tendance à s'accumuler dans ce circuit et, du fait de l'inductance mutuelle entre les inductances 12 et 13, il s'annule dans l'onduleur 2 dont les thyristors se désamorcent. Le condensateur 14 se décharge complètement et commence à se recharger dans le sens du courant. On amorce alors un nouveau jeu de thyristors. de l'onduleur 2. De même que dans le cas de la figure 2, le condensateur 14 continuant à se recharger, le courant a tendance à passer par l'onduleur 2. Lorsque l'équilibre des courants dans les onduleurs 2 et 3 est établi le thyristor 10 se désamorce naturellement. Le condensateur 14 est alors chargé positivement du côté des thyristors 10 et 11 et la commutation peut être effectuée dans l'onduleur 3. Pour cela on amorce le thyristor 11 lorsque le circuit est en phase de roue libre, et la charge du condensateur 14 provoque l'établissement du courant dans le circuit suivant: inductance 12, onduleur 2, condensateur 14, thyristor 11. Par l'effet d'inductance mutuelle, le courant d'alimentation s'accumule dans ce circuit et s'annule dans l'onduleur 3 dont les thyristors se désamorcent.

La charge du condensateur 14 continue à diminuer et s'annule, puis sous l'effet du courant maintenu par l'inductance 12, le condensateur 14 se charge en sens inverse. On amorce alors un nouveau jeu de thyristors de l'onduleur 3 et la charge du condensateur 14 pousse le courant à passer dans l'onduleur 3. L'équilibre des courants se rétablit dans les deux onduleurs 2 et 3 et le thyristor 11 se désamorce, le condensateur 14 se trouvant alors suffisamment chargé positivement du côté des onduleurs, pour réaliser une nouvelle commutation dans l'onduleur 2.

La figure 4 représente un dispositif identique à celui représenté par la figure 1, mais les inductances 12 et 13 sont disposées en série entre les deux onduleurs 2 et 3. Il s'agit en pratique d'une inductance unique à point milieu sorti. Le condensateur 14 est alors connecté par l'intermédiaire de ces deux inductances 12 et 13 à des bornes d'entrée de polarité des onduleurs 2 et 3. Un tel circuit selon l'invention présente plusieurs avantages, puisqu'il assure la commande d'un moteur synchrone à deux enroulements au démarrage et à basse vitesse du moteur sans provoquer d'irrégularités dans le couple moteur, et ceci grâce à la compensation mutuelle du courant effectuée entre les enroulements du moteur. En outre, les commutations des deux thyristors 10 et 11 s'effectuant pendant les phases de roue libre, aucune perturbation ne se répercute sur la source de courant puisque le courant passe par la diode de roue libre au moment des commutations. Il faut noter enfin l'utilisation d'un faible nombre de composants pour réaliser la commutation de douze thyristors sans avoir recours à une borne reliée au point neutre du moteur; enfin, un seul dispositif d'alimentation est nécessaire pour les deux onduleurs et les enroulements correspondants du moteur. Un tel circuit présente donc un intérêt certain pour la commande des moteurs de traction ferroviaire, puisque les moteurs peuvent alors fournir de forts couples au démarrage sans perturbation mécanique et que leur alimentation au démarrage ne provoque pas de perturbation électrique dans la ligne de distribution.

Les éléments commutateurs utilisés pour décrire les circuits selon l'invention sont des thyristors, éléments adaptés quantitativement aux courants nécessaires à l'alimentation d'un moteur de traction ferroviaire. Il est évident que d'autres éléments semi-conducteurs contrôlés, tels que des transistors pourraient convenir pour l'alimentation de moteurs de beaucoup plus faible puissance.

De même les enroulements 15 et 16 ont été représentés de manière non limitative dans un montage du type étoile, mais ils pourraient aussi bien être dans un montage du type «triangle».

**Revendications**

1. Circuit de commande d'un moteur synchrone à deux enroulements induits comprenant un dispositif d'alimentation électrique (5, 7, 9) délivrant un courant d'un sens unique déterminé, deux onduleurs (2, 3) à thyristors dont les sorties sont respectivement reliées aux enroulements (15, 16) dudit moteur (1), un circuit intermédiaire (4) relié d'une part audit dispositif d'alimentation et d'autre part aux bornes d'entrée desdits onduleurs, une unité centrale de commande des thyristors, ledit circuit intermédiaire étant adapté à supprimer le courant dans les thyristors à commuter de chaque onduleur et comprenant:

– une branche composée de deux thyristors (10, 11) en série reliant entre elles les bornes d'entrée dudit circuit intermédiaire (4), lesquelles sont respectivement reliées à une première paire de bornes d'entrée de polarités inverses dedits onduleurs (2, 3),

– une branche reliant le point de jonction desdits deux thyristors (10, 11) à une seconde paire de bornes d'entrée de polarités inverses desdits onduleurs (2, 3),

– deux inductances (12, 13) de même valeur présentant un fort facteur de couplage par inductance mutuelle, respectivement reliées en série avec les bornes d'entrée de l'une des deux paires de bornes d'entrée de polarités inverses desdits onduleurs (2, 3) ledit circuit de commande étant caractérisé en ce que ledit dispositif d'alimentation électrique (5, 7, 9) a ses bornes de sortie reliées au moyen d'une branche de roue libre comportant au moins une diode de roue libre (6) dont la cathode est reliée à la borne positive dudit dispositif d'alimentation (5, 7, 9), que ladite branche reliant le point de jonction des thyristors (10, 11) à la seconde paire de bornes d'entrée de polarités inverses desdits onduleurs (2, 3) est constituée par un condensateur (14) et que le début de la suppression du courant circulant dans les thyristors à commuter de chaque onduleur (2, 3) s'effectue lors d'une phase de roue libre pendant laquelle ladite branche de roue libre placée à la sortie du dispositif d'alimentation électrique (5, 7, 9) est conductrice.

2. Circuit selon la revendication 1, caractérisé en ce que les bornes d'entrée dudit circuit intermédiaire (4) sont reliées respectivement à ladite première paire de bornes d'entrée de polarités inverses desdits onduleurs (2, 3) par l'intermédiaire desdites inductances (12, 13).

3. Circuit selon la revendication 1, caractérisé en ce que ledit condensateur (14) est connecté à ladite seconde paire de bornes d'entrée de polarités inverses desdits onduleurs (2, 3) par l'intermédiaire desdites inductances (12, 13).

4. Circuit selon la revendication 3, caractérisé en ce que lesdites inductances (12, 13) sont constituées par une inductance unique à point milieu sorti.

5. Circuit selon l'une des revendications 1 à 4, caractérisé en ce que le condensateur (14) est préalablement chargé.

## Claims

1. Control circuit for a synchronous motor with two induced windings comprising an electrical supply device delivering a specific unidirectional current, two thyristor inverters whose outputs are connected respectively to the windings of the said motor, an intermediate circuit connected on the one hand to the said supply device and on the other hand to the input terminals of the said inverters, a central control unit for the thyristors, the said intermediaite circuit (4) being adapted for suppressing the current flowing in the thyristors being switched of each inverter and comprising, in combination:
– a branch composed of two thyristors in series connecting the input terminals of the said intermediate circuit to one another, said terminals being connected respectively to a first pair of input terminals of inverse polarities of the said inverters,
– a branch connecting the junction point of the said two thyristors to a second pair of input terminals of inverse polarities of the said inverters,
– two inductances (12, 13) of the same value having a strong coupling factor by mutual inductance, which are respectively connected in series with the input terminals of one of the two pairs of input terminals of inverse polarities of the said inverters, the said control circuit being characterised in that the said electrical supply device (5, 7, 9) has its output terminals connected by means of a freewheeling branch comprising at least one freewhelling diode (6) whose cathode is connected to the positive terminal of the said supply device (5, 7, 9), in that the said branch connecting the junction point of the thyristors (10, 11) to the second pair of input terminals of inverse polarities of the said inverters (2, 3) is constituted by a capacitor (14) and in that the beginning of the suppression of the current flowing in the thyristors being switched of each inverter (2, 3) is effected at a freewheeling phase during which the said freewheeling branch arranged at the output of the said supply device (5, 7, 9) is conductive.

2. Circuit according to claim 1, characterised in that the input terminals of the said intermediate circuit (4) are connected respectively to the said first pair of input terminals of inverse polarities of the said inverters (2, 3), through the agency of the said inductances (12, 13).

3. Circuit according to claim 1, characterised in that the said capacitor (14) is connected to the said second pair of input terminals of inverse polarities of the said inverters (2, 3) by means of the said inductances (12, 13).

4. Circuit according to claim 3, characterised in that the said inductances (12, 13) are constituted by a single inductance with centre point take-off.

5. Circuit according to one of claims 1 to 4, characterised in that the capacitor (14) is previously charged.

## Patentansprüche

1. Steuerschaltung für einen zwei Ankerwicklungen aufweisenden Synchronmotor, mit einer Vorrichtung (5, 7, 9) zur elektrischen Stromversorgung, welche einen Strom in einem einzigen gegebenen Sinne abgibt, zwei Thyristor-Wechselrichtern (2, 3), deren Ausgänge jeweils mit einer der beiden Wicklungen (15, 16) des genannten Motors (1) verbunden sind, einem Zwischenstromkreis (4), der einerseits mit der genannten Versorgungsvorrichtung und andererseits mit den Eingangsanschlüssen der genannten Wechselrichter verbunden ist, einer Zentraleinheit zur Steuerung der Thyristoren, wobei der genannte Zwischenstromkreis ausgelegt ist, um den Strom in den Schaltthyristoren jedes Wechselrichters zu unterdrücken, und ferner versehen ist mit:
– einem aus zwei Thyristoren (10, 11) zusammengesetzten Zweig, der die Eingangsanschlüsse des genannten Zwischenstromkreises (4) miteinander verbindet, welche mit dem einen bzw. anderen eines ersten Paares von Eingangsanschlüssen entgegengesetzter Polarität der genannten Wechselrichter (2, 3) verbunden sind,
– einem Zweig, welcher den Verbindungspunkt zwischen den beiden Thyristoren (10, 11) mit einem zweiten Paar von Eingangsanschlüssen entgegengesetzter Polarität der genannten Wechselrichter (2, 3) verbindet,
– zwei Induktivitäten (12, 13) gleicher Grösse, die einen hohen Kopplungsfaktor gegenseitiger induktiver Kopplung aufweisen und jeweils in Reihe mit einem der Eingangsanschlüsse des einen der beiden Paare von Eingangsanschlüssen entgegengesetzter Polarität der genannten Wechselrichter (2, 3) geschaltet sind, wobei die genannte Steuerschaltung dadurch gekennzeichnet ist, dass die Ausgangsanschlüsse der genannten elektrischen Stromversorgungsvorrichtung (5, 7, 9) über einen Freilaufzweig angeschlossen sind, welcher wenigstens eine Freilaufdiode (6) aufweist, deren Katode mit dem positiven Anschluss der genannten Versorgungsvorrichtung (5, 7, 9) verbunden ist, dass der genannte Zweig, welcher den Verbindungspunkt der Thyristoren (10, 11) mit dem zweiten Paar von Eingangsanschlüssen entgegengesetzter Polarität der genannten Wechselrichter (2, 3) verbindet, durch einen Kondensator (14) gebildet ist und dass der Beginn der Unterdrückung des in den Schaltthyristoren jedes Wechselrichters (2, 3) fliessenden Stromes während einer Freilaufphase auftritt, während welcher der genannte Freilaufzweig, der am Ausgang der elektrischen Versorgungsvorrichtung (5, 7, 9) angeordnet ist, leitend ist.

2. Schaltung nach Anspruch 1, dadurch gekennzeichnet, dass die Eingangsanschlüsse des genannten Zwischenstromkreises (4) mit dem genannten ersten Paar von Eingangsanschlüssen entgegengesetzter Polarität der genannten Wechselrichter (2, 3) jeweils über die genannten Induktivitäten (12, 13) verbunden sind.

3. Schaltung nach Anspruch 1, dadurch gekennzeichnet, dass der genannte Kondensator (14) mit dem genannten zweiten Paar von Eingangsanschlüssen entgegengesetzter Polarität der genannten Wechselrichter (2, 3) über die genannten Induktivitäten (12, 13) verbunden ist.

4. Schaltung nach Anspruch 3, dadurch gekennzeichnet, dass die genannten Induktivitäten (12, 13) durch eine einzige Induktivität mit herausgeführtem Mittelpunkt gebildet sind.

5. Schaltung nach einem der Ansprüche 1 bis 4, dadurch gekennzeichnet, dass der Kondensator (14) zuvor aufgeladen ist.

0 107 539

FIG. 1

FIG. 2

7

# FIG. 3

# FIG. 4